# EUROPEAN PATENT SPECIFICATION

(11) **EP 1 148 989 B1**
(45) Date of publication and mention of the grant of the patent: **26.11.2003**
(21) Application number: 00912448.8
(22) Date of filing: 03.02.2000
(51) Int. Cl.: B29D 11/00

(54) **LENS MOLD CARRIER**
LINSENFORMTRÄGER
SUPPORT DE MOULE DE LENTILLE

(30) Priority: 05.02.1999 US 244967
(43) Date of publication of application: 31.10.2001
(73) Proprietor: Novartis AG, 4056 Basel (CH); Novartis Pharma GmbH, 1230 Wien (AT)
(72) Inventor: TAI, Kok-Ming, Lawrenceville, GA 30045 (US); KASTNER, Kevin, James, Clarkesville, GA 30523 (US)
(74) Representative: Grubb, Philip William
(86) International application number: EP0000871
(87) International publication number: WO00046016

(56) References cited:
- EP-A- 0 227 365
- EP-A- 0 788 871
- US-A- 3 871 803
- US-A- 4 402 659
- US-A- 4 693 446

## Description

The present invention relates to cast molding of toric contact lenses, which include an optical zone providing a cylindrical correction for patients having certain astigmatic abnormalities. Unlike contact lenses having only a spherical correction, which may generally be placed on the eye in any rotational position, toric lenses are positioned on the patient's eye such that the optical zone's toric axis is aligned with the eye's astigmatic axis.

To maintain a toric contact lens in position, it is well known to provide structure on the contact lens to orient the lens through the operation of gravity and/or eyelid movement. For example, the lens may be thinned and/or thickened, for example to provide ballast or slab-off, at various areas so that the eyelid's movement during blinking moves the lens to the correct position. For ease of discussion, all such structure, including slab-off, is generally referred to herein as "ballast." Because the ballast maintains the toric contact lens at a predetermined orientation on the eye, the toric optical zone is formed so that the toric axis is offset from the ballast orientation to align the toric axis with the patient's astigmatic axis. This offset is often defined in increments, for example of 5° or 10°. Ballast is typically defined by the outer contact lens curve to prevent discomfort to the eye and to take advantage of eyelid movement. The toric optical zone may be defined on either the front or back lens curve. Depending on the method used to manufacture the lens, however, it may be desirable to define the toric surface on the back curve.

Where the lens is formed by a cast molding process, a monomer is typically deposited in a cavity between two mold halves that are themselves formed by injection molding. Each mold half defines an optical surface that forms either the front lens curve or the back lens curve. These optical surfaces are, in turn, formed by optical tools disposed in the mold cavity of an injection molding machine. Optical tools used to make toric lens molds therefore define the toric optical zone and ballast that are imparted to the mold halves. If the ballast and the toric optical zones are formed on the same lens surface, the optical tool forming that surface would define both characteristics. Thus, for given ballast and toric zone designs, a separate optical tool is required for every offset angle. To reduce the number of required optical tools, the ballast and the toric zone may therefore be defined on opposite contact lens surfaces, and therefore on opposite lens mold halves. For instance, the ballast may be defined by the front curve mold half while the toric optical zone is defined by the back curve mold half. Accordingly, the resulting mold halves may be rotated with respect to each other to achieve a desired offset angle. Once the mold halves are formed, the lens-forming process using the mold may be automated to varying degrees. EP-A-0778871 discloses a toric indexing base curve deposition array for assembling toric base curves and front curves with a prescribed angular orientation therebetween.
The present invention is directed to an improved apparatus for holding the mold halves during the lens-forming process and rotating the halves with respect to each other to achieve a desired rotational offset between them.

It is an object of the present invention to provide an improved lens mold carrier. This and other objects are achieved by a carrier according to the present invention for holding at least one lens mold. The lens mold includes a first mold half defining a first optical surface and a second mold half defining a second optical surface. The first mold half and the second mold half are configured to receive each other so that a lens forming cavity is defined between the first optical surface and the second optical surface. The carrier includes a first frame defining a substantially planar front surface; at least a holder assembly in operative communication with the first frame and configured to receive the first mold half. The holder assembly is adjustable to rotationally secure the first mold half so that the first optical surface faces outward from the first frame front surface and in any of a plurality of rotational positions with respect to an axis normal to the first frame front surface. A second frame is configured to receive the second mold half so that the second optical surface faces outward from a subsiantially planar front surface of the second frame. The second frame front surface opposes the first frame front surface upon alignment of the first frame and the second frame in an operative position in which the first mold half and the second mold half are received in each other so that the lens forming cavity is formed between the first optical surface and the second optical surface.

A full and enabling disclosure of the present invention, including the best mode thereof, directed to one of ordinary skill in the art, is set forth in the specification, which makes reference to the appended drawings, in which;
Figure 1 is a perspective view of a lens mold carrier constructed in accordance with an embodiment of the present invention;
Figure 2 is an exploded view of the carrier shown in Figure 1;
Figure 3 is a cross-sectional view taken along the line 3-3 shown in Figure 1;
Figure 4 is a cross-sectional view taken along the line 4-4 shown in Figure 1;
Figure 5 is a partial perspective view of an adjusting tool for rotating a holder assembly within a lens mold carrier in accordance with an embodiment of the present invention; and
Figure 6 is a partial cross-sectional view of a lens mold carrier in accordance with an embodiment of the present invention.

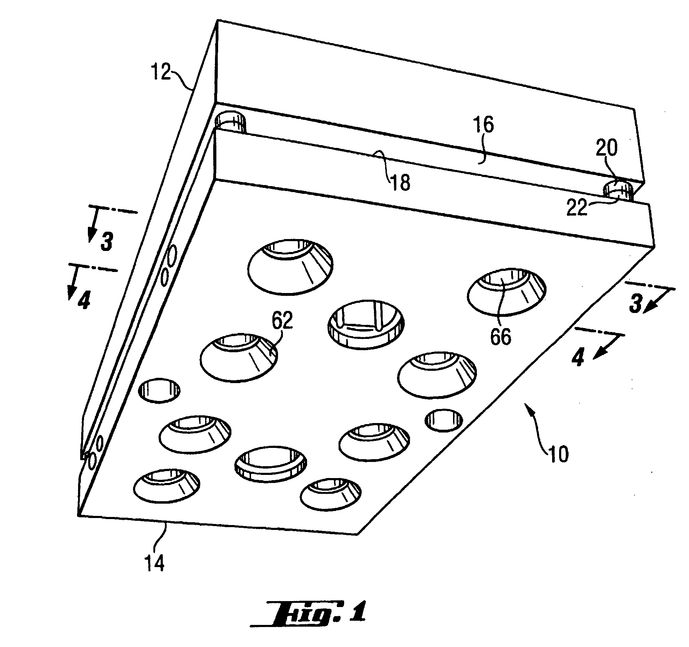

Referring to Figure 1, a lens mold carrier 10 includes a first frame 12 and a second frame 14. First frame 12 and second frame 14 define respective front surfaces 16 and 18 that oppose each other in the operative position of carrier 10 illustrated in Figure 1. Surfaces 16 and 18 are substantially planar. That is, despite the presence of holes in the surfaces, the surfaces are otherwise flat. Minor variations may be provided in the surfaces in this embodiment as long as they do not prevent placement of the plates in the operative position. Four pairs of opposing rest buttons 20 and 22 are disposed at the comers of frames 12 and 14 to maintain a predetermined distance between the frames in the operative position.

As illustrated in the figures and discussed herein, frames 12 and 14 comprise solid plates having cavities therein to house other components. It should be understood, however, that this is for illustrative purposes only and that other suitable frame constructions may be employed within the present invention. For example, frames may be relatively open structures with open front surfaces. Clips, rings or other structures may be provided within the frames to hold the other components in position. Further, the front surfaces need not be substantially planer as shown in the present figures. They may be constructed in any suitable manner so that the mold halves may be properly oriented. Frames 12 and 14 may be held and transported within an automated process for manufacturing contact lenses. During the lens molding step, the frames are moved to the operative position shown in Figures 1, 3 and 4. This movement is relative. That is, the frames are moved together relative to each other. With respect to a machine holding and transporting the frames, however, one frame may be held stationary while the other is moved. It should be understood that this nevertheless defines relative movement between the frames.

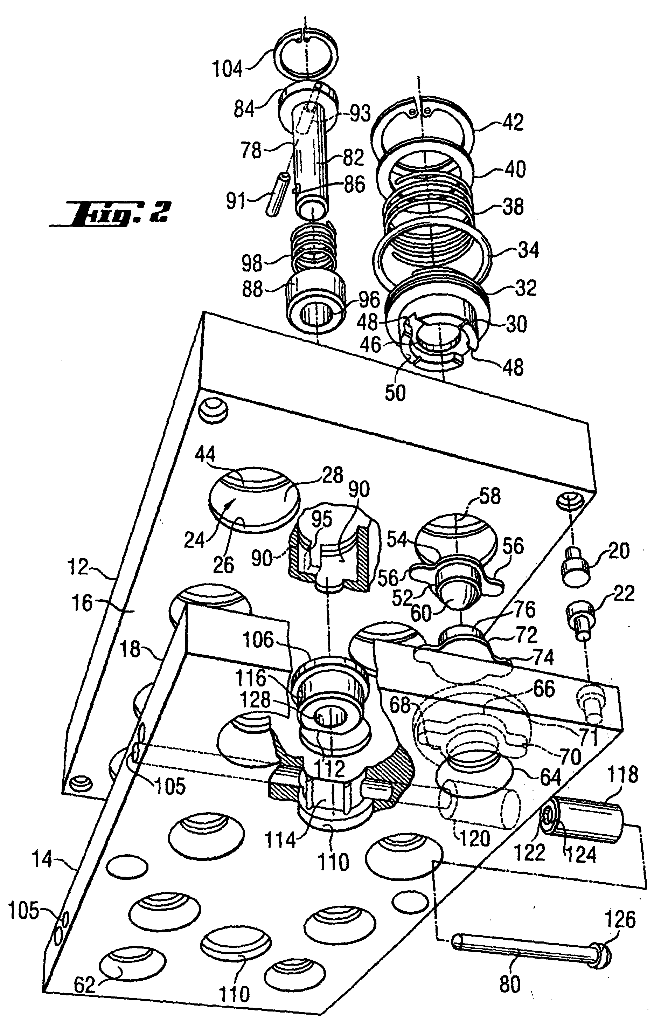

Referring to Figure 2, first frame 12 defines eight holes 24 extending through the plate and opening to front surface 16. An annular shoulder 26 extends radially inward from the inner circumferential surface 28 of each hole 24. In this embodiment, annular shoulder 26 is adjacent front surface 16 so that the front surface includes one side of the shoulder. It should be understood, however, that the shoulder may be disposed further within the hole as appropriate for other suitable constructions. In addition, while annular shoulder 26 extends continuously about hole 24, it should be understood that the shoulder may be defined by discontinuous sections.

Each hole 24 receives a holder assembly including a generally cylindrical holding member 30 having an annular shoulder 32 at the base thereof. Referring also to Figure 6, an O-ring 34 is received within a channel 36 of shoulder 32. A coil spring 38 bears on one side against holding member 30 and on the opposite side against a washer 40. Washer 40 sits on lock ring 42 received in an annular groove 44 defined in surface 28. Because lock ring 42 is axially secured to plate 12 with respect to the axis of hole 24, spring 38 bears on frame 12 to bias holding member 30 toward front surface 16 so that shoulder 32 engages shoulder 26. In the illustrated embodiment, shoulder 32 abuts the opposing surface of shoulder 26. It should be understood, however, that the holding member may engage shoulder 26 through another component, for example an annular flange surrounding a lens mold half. In a preferred embodiment, holding member 30 and plate 12 are constructed from steel, and spring 38 is a coil spring of sufficient length so that between about 10 and about 15 pounds of pressure is applied to the holding member.

Holding member 30 also defines a recess 46 defining a circular central portion and two outer channels 48 extending through a rim 50. Recess 46 receives a lens mold half 52 defining an annular flange 54 and tabs 56 extending therefrom. Tabs 56 of the lens mold half 52 are received in outer channels 48 (with approximately 0.076 mm (0,003 inches) clearance in one preferred embodiment) so that mold half 52 is held in and rotatable with holding member 30 with respect to an axis 58 of hole 24.

In the figures, frame 12 is shown as the top frame. Holding member 30 holds base curve mold half 52, which defines a convex optical surface 60. It should be understood, however, that the position of the frames may be reversed and that, moreover, holding member 30 may be used to secure either the front mold half or the base curve mold half.
Referring again to Figures 1, 2 and 6, second frame 14 includes a plurality of holes 62 disposed in an arrangement corresponding to the disposition of holes 24 in first plate 12 so that when frames 12 and 14 are aligned in the operative position shown in Figure 1, the corresponding mold halves of each lens mold oppose each other. Each hole 62 includes a cylindrical portion 66 and a frustoconical counterbore portion 64, thereby forming an annular shoulder 68. Cylindrical portion 66 opens into side slots 70 which, along with cylindrical portion 66, open to front surface 18 through a frustoconical bore section 71. Cylindrical section 66 and tabs 70 are shaped to receive an annular flange 72 and tabs 74 of a second mold half 76 so that mold half 76 is rotationally fixed within hole 62 with respect to axis 58. That is, mold half 76 does not rotate about axis 58 with respect to frame 14.

Referring to Figure 2, a latch mechanism to hold frame 12 and frame 14 in the operative position shown in Figure 1 includes a king pin 78 and a lock pin 80. King pin 78 includes an elongated shaft portion 82 and a cylindrical cap 84 at one end of the shaft. A transverse hole 86 extends through the shaft end opposite the cap. A bushing 88 is press fit in a hole 90 in plate 12. A bore 96 receives the shaft portion of king pin 78. To rotationally secure king pin 78 with respect to frame 12, and therefore with respect to frame 14 when the frames are in the operative position shown in Figure 1, a pin 91 is received in a counterbore 93 in cap 84 so that pin 91 extends radially from the cap and is received in a slot 95 extending radially outward from hole 90. Referring also to Figure 4, a spring 98 bears on one side against bushing 88 and on the opposite side against cap 84. Bushing 88 abuts a shoulder 100 formed by a counterbore formed in hole 90. Thus, spring 98 biases king pin 78 away from frame 14 and lock pin 80. A lock ring 104 retains king pin 78 within frame 12.

Lock pin 80 is received in a bore 105 extending through the width of frame 14. A bushing 106 is press fit in a bore 108 extending through frame 14 and intersecting bore 105. Bushing 106 includes a flat side 112 that mates with an opposing flat 114 in bore 110 to rotationally align the bushing. Bushing 106 includes a through hole 116 that is slightly larger than the diameter of lock pin 80 and that aligns with bore 105 and an axial bore 128 that aligns with bore 96 of bushing 88 when frames 12 and 14 are in the operative position. A bushing 118 is press fit in a counterbore portion 120 of bore 105. Bushing 118 defines a hole 122 in an end 124 thereof so that hole 122 axially aligns lock pin 80 in bore 105 and so that an end cap 126 of pin 80 abuts end surface 124 to limit the axial passage of pin 80 in bore 105.

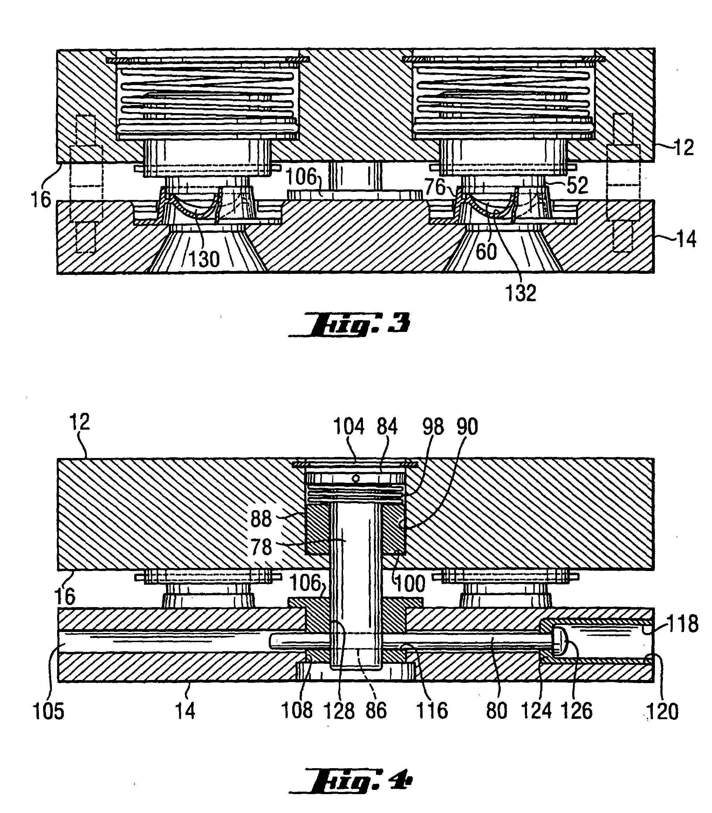

For purpose of clarity, only one latch mechanism and one lens mold half holder assembly are illustrated in Figure 2. It should be understood, however, that a holder assembly is provided for each hole 24 and that a latch mechanism is received in each of two pair of bores 90 and 110. Accordingly, carrier 10 may be used to simultaneously form eight contact lenses using eight contact lens mold assemblies. As noted above, and referring more particularly to Figures 3 and 6, frame 12 rotationally secures lens mold half 52 so that its optical surface 60 faces outward from front surface 16. As shown in the illustrated embodiment, mold half 52 is held by holding member 30 slightly outward from front surface 16. As frame 14 is brought toward front surface 16, mold half 76 and mold half 52 engage each other as shown in Figure 3 to form a lens molding cavity 130 between optical surface 60 and an optical surface 132 of mold half 76. A monomer mixture is deposited in concave surface 132 prior to bringing frames 12 and 14 together, and cavity 130 forms the monomer into the shape of a contact lens.

It should be understood that the mold halves may be placed in various suitable positions in or on the frames as long as the frames may be put together so that the mold halves engage to form the lens cavity. For example, frame 14 may be constructed so that a holding member holds mold half 76 within hole 62 so that optical surface 132 is below front surface 18 with respect to frame 12. Mold half 52 and/or frame 12 is constructed in such an embodiment so that optical surface 60 extends into hole 62 to oppose optical surface 132. As noted above, front curve mold halves 76 are held in a rotationally fixed position with respect to frames 12 and 14 while the base curve mold halves 52 are rotatable with their respective holding members 30 with respect to the frames. Assuming that the front curve mold halves define the lens ballast and that the base curve mold halves define the toric or multifocal lens characteristics, the holding members 30 may be rotated as needed to achieve a desired offset between the toric or multifocal axis and the ballast in each mold pair.

Initially, all holding members 30 may be aligned in a uniform, predetermined rotational position with respect to frame 12 to receive mold halves 52. This may be desirable in a system in which an automated transfer device removes the mold halves from an injection molding machine and places them directly into the carrier in a certain orientation. A similar transfer device may place front curve mold halves 76 into frame 14. Once the mold halves are in the frames, the system then rotates each mold half 52 to achieve a desired offset between its toric or multifocal axis and the ballast of its opposing front curve mold half.

The present invention may be used within a variety of molding systems. In the present embodiment, only mold halves 52 are rotated as needed to achieve a desired offset between the toric axis and the ballast, and rotatable holder assemblies 30 are therefore provided only in frame 12. It should be understood, however, that frame 14 could also include rotatable holder assemblies so that the front curve molds are rotatable. In such an embodiment, frame 14 would have a construction similar to that of frame 12 with respect to the holder assemblies. Once the mold halves are properly oriented, frame 14 is moved to a dispensing station at which monomer is injected into the mold half front curves. A suction device is then brought to the bottom of frame 12 and applies suction to holes 24 (Figure 2) to retain mold halves 52 in frame 12 as the frame is inverted and moved to a position above frame 14. The frame is then placed down onto frame 14 so that the frames may be attached as described in more detail below. As noted above, mold halves 52 may be rotated prior to assembly of the frames to achieve the desired optical axis/ballast offset. However, the mold halves may instead be rotated after assembly. In either case, the molds may be rotated in a similar manner as will now be described with reference to the embodiment shown in Figures 3 and 6.

A frictional engagement between O-ring 34 and surface 28 must be overcome before holding member 30, and therefore mold half 52, rotates with respect to frame 12 about axis 58 (Figure 2). O-ring 34 is preferably made of a flexible polymer or elastomer, such as a polyamide, polyester or flouropolymer elastomer. Its construction, and the construction of hole 24 and the holder assembly, are chosen such that this threshold rotational force necessary to rotate holding member 30 with respect to frame 12 is greater than rotational forces that may be reasonably expected between the holding member and frame 12 during movement of carrier 10 after the lens molds are placed in the carrier and during the lens casting process.

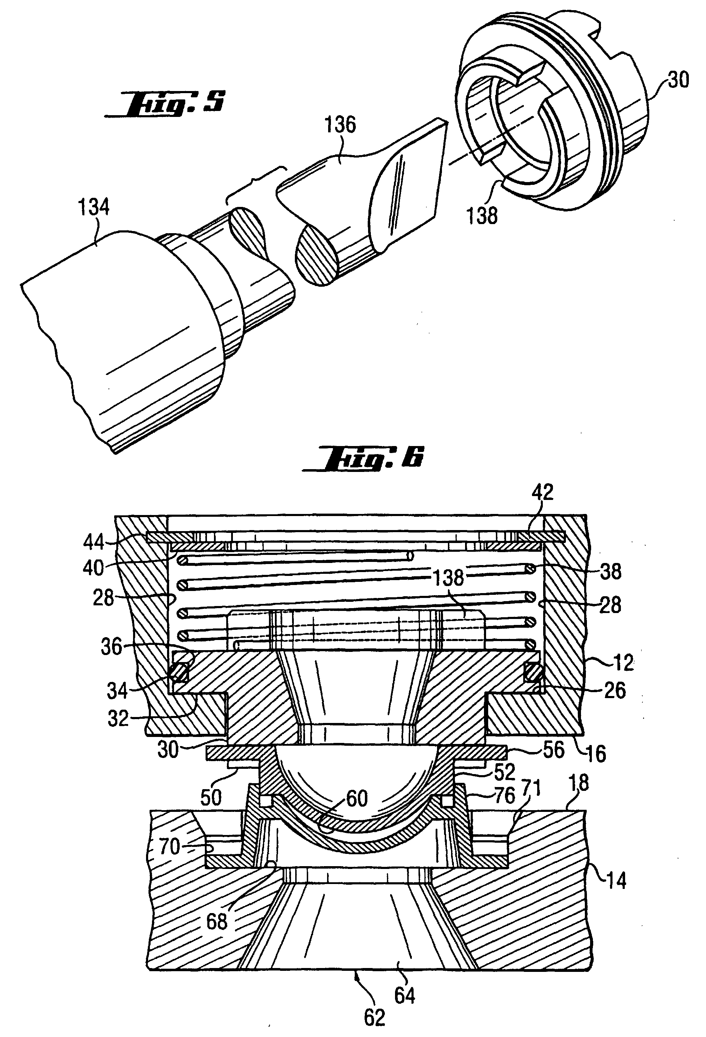

The threshold rotational force nevertheless permits rotation of holding member 30 by application of torque to holding member 30 by manual or mechanical means, for example by a tool 134 shown in Figure 5 that is operated automatically by the cast molding machine. The cast molding machine inserts tool 134 into bore 24 through lock ring 42, washer 40 and spring 38 until a screw driver tip 136 is inserted within a slot 138 in holding member 30. The machine then rotates tool 134 until lens mold half 52 is rotated about axis 58 (Figure 2) to a desired rotational position with respect to mold half 76. Lens mold half 52 may thus be placed in any of a plurality of rotational positions so that the optical surface 60 cylindrical axis may be offset from the ballast provided by optical surface 132 to the desired degree. The tool is then withdrawn from bore 24.

Referring to Figures 3 and 4, prior to the point when frames 12 and 14 are brought together so that the mold halves engage one another to form lens mold cavity 130, king pin 78 and lock pin 80 are not engaged, and spring 98 biases cap 84 upward to engage lock ring 104 so that through hole 86 does not align with bore 105. Lock pin 80 is not inserted in bore 105. Once the frames are brought together in the operative position shown in Figures 1 and 3, however, the cast molding machine inserts a tool into bore 90 from the rear side of frame 12, engaging cap 84 and pushing king pin 78 forward against the bias of spring 98 until hole 86 aligns with bore 105. A light and light receiver may be placed at opposite sides of bore 105 to confirm that hole 86 is aligned with the bore. A second tool 184 holds lock pin 80. When the bore and hole are aligned, the machine inserts this tool into the right hand opening of bore 105 to push lock pin 80 to the left until it passes through hole 86 and end cap 126 abuts end surface 124. The first tool is then withdrawn from bore 90, causing spring 98 to push upward against king pin 78, thereby holding lock pin 80 between king pin 78 and bushing 106 as shown in Figure 4. The second tool is then removed from bore 105. In the operative position of frames 12 and 14, suction is not required to maintain mold halves 52 in frame 12, and is therefore no longer applied.

When the frames are latched together, carrier 10 may be moved as a unit to later processing stages for ultraviolet curing. After a suitable curing period, for example approximately thirty minutes, the assembled frames may be moved to another station or facility for finishing of the cured lenses. To disassemble the frames, a tool is inserted into bore 90 to push king pin 78 downward against the bias of spring 98. This releases the hold on lock pin 80 between king pin 78 and bushing 106. A tool is then inserted into the left hand side of bore 105 and pushes lock pin 80 to the right until it clears hole 86. The tool is then removed from bore 90 so that king pin 78 returns to its initial position. The frames may then be separated so that the cured contact lenses formed in the cavities 130 (Figure 3) of the eight lens molds carried by carrier 10 may be removed. During subsequent disassembly of carrier 10, for example for cleaning or repair, it may be desirable to confirm that lock pin 80 has been removed from bore 105. In an automated process, a light source emits light into one side of bore 105. A light detector disposed at the other end of the bore receives this light to ensure that the bore is clear.

While one or more preferred embodiments of the invention have been described above, it should be understood that any and all equivalent realizations of the present invention are included within the scope and spirit thereof. For example, the latching mechanism disposed within the frames may be attached at outer plate surfaces and may comprise any suitable construction and configuration. It should also be understood that mechanisms other than friction may be used to wholly or partially rotationally secure a holding member with respect to a frame. For example, the embodiment illustrated in the figures may be modified so that either of the annular shoulders 26 and 32 defines a series of equally spaced protrusions having curved or otherwise angled surfaces that are received by equally spaced corresponding recesses in the other shoulder. These recesses may have angled surfaces that oppose the angled surfaces of the protrusions. Thus, the threshold force necessary to rotate the holding member is additionally determined by the angle at which these surfaces are disposed. Adjacent recesses, and therefore adjacent protrusions, may be spaced apart from each other in increments, for example of 10°, that correspond to the toric axis offset increments in which the contact lenses are provided. In addition, the holding member may engage the frame stop directly or through another component. For example, the mold half may be disposed between the holding member and a shoulder or other stop so that the holding member engages the shoulder through the mold half annular flange. Thus, the embodiments depicted are presented by way of example only and are not intended as limitations upon the present invention. It should therefore be understood by those of ordinary skill in this art that the present invention is not limited to such embodiments since modifications can be made. Therefore, it is contemplated that any and all such embodiments are included in the present invention as may fall within the literal or equivalent scope of the appended claims.

## Claims

1. A carrier (10) for holding at least one lens mold (52,76) having a first mold half (52) defining a first optical surface (60) and a second mold half (76) defining a second optical surface (132), wherein the first mold half (52) and the second mold half (76) are configured to receive each other so that a lens forming cavity (130) is defined between the first optical surface (60) and the second optical surface (132), said carrier comprising:
a first frame (12) defining a substantially planar front surface (16);
at least one holder assembly (30,34,38,40,42) in operative communication with said first frame (12) and configured to receive said first mold half (52), said holder assembly being adjustable to rotationally secure said first mold half (52) so that said first optical surface (60) faces outward from said first frame front surface (16) and in any of a plurality of rotational positions with respect to an axis (58) normal to said first frame front surface (16); and
a second frame (14) configured to receive said second mold half (76) so that said second optical surface (132) faces outward from a substantially planar front surface (18) of said second frame (14), said second frame front surface (18) opposing said first frame front surface (16) upon alignment of said first frame (12) and said second frame (14) in an operative position, in which said first mold half (52) and said second mold half (76) are received in each other so that said lens forming cavity (130) is formed between the first optical surface (60) and the second optical surface (132).

2. A carrier according to claim 1, wherein said first frame (12) includes at least one stop (26) and wherein said holder assembly (30,34,38,40,42) includes a holding member (30,34) and a biasing member (38,40,42), wherein said biasing member (38,40,42) biases said holding member (30,34) to engage said stop (26), and wherein said holding member (30,34) is rotatable with respect to said stop (26) upon application of a relative rotational force between said holding member (30,34) and said stop (26) greater than a threshold level, said threshold level being greater than relative rotational forces applied between said holding member (30,34) and said stop (26) during relative movement of said first frame (12) and said second frame (14) to said operative position and during formation of a lens in said lens cavity (130).

3. A carrier according to claim 2, wherein said stop (26) defines a first annular surface, wherein said holding member (30,34) defines a second annular surface (32), and wherein said second annular surface (32) abuts said first annular surface upon engagement of said stop (26) by said holding member (30,34) biased by said biasing member (38,40,42).

4. A carrier according to claim 2 or claim 3, wherein said holding member (30,34) is cylindrically shaped.

5. A carrier carrier according to any one of claims 2 to 4, wherein said holding member (30,34) has a recess (48) for receiving said first mold haff (52) so that said first mold half is rotationally fixed with respect to said holding member (30,34).

6. A carrier according to any one of the preceding claims, including a latch mechanism (78,82,84,86,88,90,91,93,95,96,104,80,105,106,108,110,112,114,116,118,120, 122,124,126,128) configured to retain said first frame (12) and said second frame (14) in said operative position.

7. A carrier according to claim 6, wherein said latch mechanism includes a first pin (78) housed by one of said first frame (12) and said second frame and a second pin (80) housed by the other of said first frame and said second frame (14), said first pin (78) and said second pin (80) being configured to releasably interlock with each other.

8. A carrier according to claim 7, wherein said first pin (78) is reciprocally movable with respect to its said frame (12) and said other frame (14) along a path of travel parallel to said axis (58) and extending to said other frame (14), and wherein said second pin (80) is reciprocally movable with respect to said other frame (14) along a path of travel normal to said axis (58) and intersecting said first pin path of travel.

9. A carrier according to claim 8, wherein one of said first pin (78) and said second pin defines a hole (86) therein aligned with the path of travel of the other of said first pin and said second pin (80) and configured to receive said other pin (80).

10. A carrier according to claim 8 or claim 9, wherein said one pin (78) is biased away from said other pin (80).

11. A carrier according to any one of the preceding claims, wherein said first frame (12) and said second frame (14) include respective contact surfaces (20,22), said first frame contact surface (20) bearing on said second frame contact surface (22) to separate said first frame (12) and said second frame (14) in said operative position by a predetermined distance.

12. A carrier (10) according to any one of the preceding claims, the carrier being adapted to hold a plurality of lens molds (52,76), the carrier comprising:
a plurality of holder assemblies (30,34,38,40,42) in operative communication with said first frame (12), wherein each said holder assembly is configured to receive a respective said first lens mold half (52) and is adjustable to rotationally secure said first mold half (52) so that said first optical surface (60) faces outward from said first frame front surface (16) and in any of a plurality of rotational positions with respect to said axis (58) normal to said first frame front surface (16);
wherein said second frame (14) is configured to receive said second mold halves (76) in a pattern corresponding to the disposition of said first mold halves (52) in said first frame (12) so that said second optical surfaces (132) face outward from said front surface (18) of said second frame (14), said second frame front surface (18) opposing said first frame front surface (16) upon alignment of said first frame (12) and said second frame (14) in an operative position in which each said first mold half (52) engages an opposing said second mold half (76) to form said cavity (130).

## Patentansprüche

1. Träger (10) zum Halten mindestens einer Linsenform (52, 76) mit einer ersten Formhälfte (52), die eine erste optische Oberfläche (60) definiert, und einer zweiten Formhälfte (76), die eine zweite optische Oberfläche (132) definiert, wobei die erste Formhälfte (52) und die zweite Formhälfte (76) gestaltet sind, um einander aufzunehmen, sodass ein Linsenformhohlraum (130) zwischen der ersten optischen Oberfläche (60) und der zweiten optischen Oberfläche (132) definiert wird, wobei der Träger umfasst:
einen ersten Rahmen (12), der eine im Wesentlichen planare Vorderfläche (16) definiert;
mindestens eine Halteranordnung (30, 34, 38, 40, 42) in wirksamer Verbindung mit dem ersten Rahmen (12), und die gestaltet ist, um die erste Formhälfte (52) aufzunehmen, wobei die Halteranordnung einstellbar ist, um die erste Formhälfte (52) rotationsmäßig zu befestigen, sodass die erste optische Oberfläche (60) von der Vorderfläche (16) des ersten Rahmens nach außen gewandt ist, und in einer beliebigen von einer Vielzahl von Drehpositionen bezüglich einer zur Vorderfläche (16) des ersten Rahmens senkrechten Achse (58); und
einen zweiten Rahmen (14), der gestaltet ist, um die zweite Formhälfte (76) so aufzunehmen, dass die zweite optische Oberfläche (132) von einer im Wesentlichen planaren Vorderfläche (18) des zweiten Rahmens (14) nach außen gewandt ist, wobei die Vorderfläche (18) des zweiten Rahmens bei Ausrichtung des ersten Rahmens (12) und des zweiten Rahmens (14) in einer Arbeitsposition der Vorderfläche (16) des ersten Rahmens gegenüberliegt, in welcher die erste Formhälfte (52) und die zweite Formhälfte (76) ineinander aufgenommen sind, sodass der Linsenformhohlraum (130) zwischen der ersten optischen Oberfläche (60) und der zweiten optischen Oberfläche (132) gebildet wird.

2. Träger nach Anspruch 1, wobei der erste Rahmen (12) mindestens einen Anschlag (26) umfasst und wobei die Halteranordnung (30, 34, 38, 40, 42) ein Halteelement (30, 34) und ein Vorspannungselement (38, 40, 42) umfasst, wobei das Vorspannungselement (38, 40, 42) das Halteelement (30, 34) vorspannt, um es mit dem Anschlag (26) in Eingriff zu bringen, und wobei das Halteelement (30, 34) bezüglich des Anschlags (26) nach Aufbringen einer relativen Drehkraft zwischen dem Halteelement (30, 34) und dem Anschlag (26), die größer ist als ein Schwellenpegel, drehbar ist, wobei der Schwellenpegel größer ist als relative Drehkräfte, die zwischen dem Halteelement (30, 34) und dem Anschlag (26) während der relativen Bewegung des ersten Rahmens (12) und des zweiten Rahmens (14) in die Arbeitsposition und während der Ausbildung einer Linse in dem Linsenhohlraum (130) aufgebracht werden.

3. Träger nach Anspruch 2, wobei der Anschlag (26) eine erste ringförmige Oberfläche definiert, wobei das Halteelement (30, 34) eine zweite ringförmige Oberfläche (32) definiert und wobei die zweite ringförmige Oberfläche (32) bei Eingriff des Anschlags (26) mit dem Halteelement (30, 34), das durch das Vorspannungselement (38, 40, 42) vorgespannt wird, an der ersten ringförmigen Oberfläche anliegt.

4. Träger nach Anspruch 2 oder Anspruch 3, wobei das Halteelement (30, 34) zylindrisch geformt ist.

5. Träger nach einem der Ansprüche 2 bis 4, wobei das Halteelement (30, 34) eine Aussparung (48) zum Aufnehmen der ersten Formhälfte (52) aufweist, sodass die erste Formhälfte bezüglich des Halteelements (30, 34) rotationsmäßig befestigt ist.

6. Träger nach einem der vorangehenden Ansprüche mit einem Verriegelungsmechanismus (78, 82, 84, 86, 88, 90, 91, 93, 95, 96, 104, 80, 105, 106, 108, 110, 112, 114, 116, 118, 120, 122, 124, 126, 128), der dazu ausgelegt ist, den ersten Rahmen (12) und den zweiten Rahmen (14) in der Arbeitsposition zu halten.

7. Träger nach Anspruch 6, wobei der Verriegelungsmechanismus einen ersten Stift (78), der von einem des ersten Rahmens (12) und des zweiten Rahmens aufgenommen wird, und einen zweiten Stift (80), der vom anderen des ersten Rahmens und des zweiten Rahmens (14) aufgenommen wird, umfasst, wobei der erste Stift (78) und der zweite Stift (80) ausgelegt sind, um lösbar miteinander verriegelt zu werden.

8. Träger nach Anspruch 7, wobei der erste Stift (78) bezüglich seines Rahmens (12) und des anderen Rahmens (14) entlang eines Bewegungsweges, welcher zur Achse (58) parallel ist und sich zum anderen Rahmen (14) erstreckt, hin- und herbewegbar ist und wobei der zweite Stift (80) bezüglich des anderen Rahmens (14) entlang eines Bewegungsweges, welcher zur Achse (58) senkrecht ist und den Bewegungsweg des ersten Stifts schneidet, hin- und herbewegbar ist.

9. Träger nach Anspruch 8, wobei einer des ersten Stifts (78) und des zweiten Stifts ein Loch (86) darin definiert, das auf den Bewegungsweg des anderen des ersten Stifts und des zweiten Stifts (80) ausgerichtet ist und dazu ausgelegt ist, den anderen Stift (80) aufzunehmen.

10. Träger nach Anspruch 8 oder Anspruch 9, wobei der eine Stift (78) vom anderen Stift (80) weg vorgespannt wird.

11. Träger nach einem der vorangehenden Ansprüche, wobei der erste Rahmen (12) und der zweite Rahmen (14) jeweilige Kontaktflächen (20, 22) umfassen, wobei die Kontaktfläche (20) des ersten Rahmens an der Kontaktfläche (22) des zweiten Rahmens anliegt, um den ersten Rahmen (12) und den zweiten Rahmen (14) in der Arbeitsposition um einen vorbestimmten Abstand zu trennen.

12. Träger (10) nach einem der vorangehenden Ansprüche, wobei der Träger dazu ausgelegt ist, eine Vielzahl von Linsenformen (52, 76) zu halten, wobei der Träger umfasst:
eine Vielzahl von Halteranordnungen (30, 34, 38, 40, 42) in wirksamer Verbindung mit dem ersten Rahmen (12), wobei jede Halteranordnung dazu ausgelegt ist, eine jeweilige erste Linsenformhälfte (52) aufzunehmen, und einstellbar ist, um die erste Formhälfte (52) rotationsmäßig zu befestigen, sodass die erste optische Oberfläche (60) von der Vorderfläche (16) des ersten Rahmens nach außen gewandt ist, und in einer beliebigen von einer Vielzahl von Drehpositionen bezüglich der Achse (58), die zur Vorderfläche (16) des ersten Rahmens senkrecht ist;
wobei der zweite Rahmen (14) dazu ausgelegt ist, die zweiten Formhälften (76) in einem Muster entsprechend der Anordnung der ersten Formhälften (52) in dem ersten Rahmen (12) aufzunehmen, sodass die zweiten optischen Oberflächen (132) von der Vorderfläche (18) des zweiten Rahmens (14) nach außen gewandt sind, wobei die Vorderfläche (18) des zweiten Rahmens der Vorderfläche (16) des ersten Rahmens bei Ausrichtung des ersten Rahmens (12) und des zweiten Rahmens (14) in einer Arbeitsposition gegenüberliegt, in welcher jede erste Formhälfte (52) mit einer entgegengesetzten zweiten Formhälfte (76) in Eingriff steht, um den Hohlraum (130) zu bilden.

## Revendications

1. Support (10) destiné à contenir au moins un moule de lentille (52, 76) comportant une première moitié de moule (52) définissant une première surface optique (60) et une seconde moitié de moule (76) définissant une seconde surface optique (132), dans lequel la première moitié de moule (52) et la seconde moitié de moule (76) sont configurées pour se recevoir mutuellement de façon qu'une cavité de formation de lentille (130) soit définie entre la première surface optique (60) et la seconde surface optique (132), ledit support comprenant :
un premier cadre (12) définissant une surface frontale (16) sensiblement plane ;
au moins un ensemble de maintien (30, 34, 38, 40, 42) en communication fonctionnelle avec ledit premier cadre (12) et configuré pour recevoir ladite première moitié de moule (52), ledit ensemble de maintien étant réglable de manière à immobiliser en rotation ladite première moitié de moule (52), de telle sorte que ladite première surface optique (60) soit tournée vers l'extérieur par rapport à ladite surface frontale (16) du premier cadre et dans une position quelconque parmi une pluralité de positions angulaires par rapport à un axe (58) normal à ladite surface frontale (16) du premier cadre ; et
un second cadre (14) configuré pour recevoir ladite seconde moitié de moule (76) de telle sorte que ladite seconde surface optique (132) soit tournée vers l'extérieur par rapport à une surface frontale (18), sensiblement plane, dudit second cadre (14), ladite surface frontale (18) du second cadre étant opposée à ladite surface frontale (16) du premier cadre lors de l'alignement dudit premier cadre (12) et dudit second cadre (14) dans une position fonctionnelle, dans laquelle ladite première moitié de moule (52) et ladite seconde moitié de moule (76) sont reçues l'une dans l'autre, de telle sorte que ladite cavité de formation de lentille (130) soit formée entre la première surface optique (60) et la seconde surface optique (132).

2. Support selon la revendication 1, dans lequel ledit premier cadre (12) comporte au moins une butée (26) et dans lequel ledit ensemble de maintien (30, 34, 38, 40, 42) comporte un élément de maintien (30, 34) et un élément de sollicitation (38, 40, 42), dans lequel ledit élément de sollicitation (38, 40, 42) sollicite ledit élément de maintien (30, 34) pour le faire venir en prise avec ladite butée (26), et dans lequel ledit élément de maintien (30, 34) peut tourner par rapport à ladite butée (26) lors de l'application d'une force de rotation relative entre ledit élément de maintien (30, 34) et ladite butée (26), supérieure à un niveau de seuil, ledit niveau de seuil étant supérieur à des forces de rotation relatives appliquées entre ledit élément de maintien (30, 34) et ladite butée (26) pendant le mouvement relatif dudit premier cadre (12) et dudit second cadre (14) vers ladite position fonctionnelle et pendant la formation d'une lentille dans ladite cavité de lentille (130).

3. Support selon la revendication 2, dans lequel ladite butée (26) définit une première surface annulaire, dans lequel ledit élément de maintien (30, 34) définit une seconde surface annulaire (32), et dans lequel ladite seconde surface annulaire (32) vient en butée contre ladite première surface annulaire lors de la venue en prise avec ladite butée (26) dudit élément de maintien (30, 34) sollicité par ledit élément de sollicitation (38, 40, 42).

4. Support selon la revendication 2 ou la revendication 3, dans lequel ledit élément de maintien (30, 34) est de forme cylindrique.

5. Support selon l'une quelconque des revendications 2 à 4, dans lequel ledit élément de maintien (30, 34) comporte une cavité (48) destinée à recevoir ladite première moitié de moule (52), de telle sorte que ladite première moitié de moule soit bloquée en rotation par rapport audit élément de maintien (30, 34).

6. Support selon l'une quelconque des revendications précédentes, comportant un mécanisme de verrouillage (78, 82, 84, 86, 88, 90, 91, 93, 95, 96, 104, 80,105, 106, 108, 110, 112, 114, 116, 118, 120, 122, 124, 126, 128) configuré pour retenir ledit premier cadre (12) et ledit second cadre (14) dans ladite position fonctionnelle.

7. Support selon la revendication 6, dans lequel ledit mécanisme de verrouillage comporte une première broche (78) logée dans l'un desdits premier cadre (12) et second cadre, et une seconde broche (80) logée dans l'autre desdits premier cadre et second cadre (14), ladite première broche (78) et ladite seconde broche (80) étant configurées pour se verrouiller mutuellement, de façon amovible, l'une avec l'autre.

8. Support selon la revendication 7, dans lequel ladite première broche (78) est mobile de façon alternative par rapport à son dit cadre (12) et audit autre cadre (14) sur un trajet de déplacement parallèle audit axe (58) et se prolongeant jusqu'audit autre cadre (14), et dans lequel ladite seconde broche (80) est mobile de façon alternative par rapport audit autre cadre (14), sur un trajet de déplacement normal audit axe (58) et coupant le trajet de déplacement de ladite première broche.

9. Support selon la revendication 8, dans lequel une broche parmi ladite première broche (78) et ladite seconde broche définit en elle un trou (86) aligné avec le trajet de déplacement de l'autre broche parmi ladite première broche et ladite seconde broche (80) et configuré pour recevoir ladite autre broche (80).

10. Support selon la revendication 8 ou la revendication 9, dans lequel ladite une broche (78) est sollicitée dans un sens l'éloignant de ladite autre broche (80).

11. Support selon l'une quelconque des revendications précédentes, dans lequel ledit premier cadre (12) et ledit second cadre ( 14) comportent des surfaces de contact respectives (20, 22), ladite surface de contact (20) du premier cadre portant sur ladite surface de contact (22) du second cadre pour séparer d'une distance prédéterminée ledit premier cadre (12) dudit second cadre (14), dans ladite position fonctionnelle.

12. Support (10) selon l'une quelconque des revendications précédentes, le support étant adapté pour contenir une pluralité de moules de lentille (52, 76), le support comprenant :
une pluralité d'ensembles de support (30, 34, 38, 40, 42) en communication fonctionnelle avec ledit premier cadre (12), chaque dit ensemble de support étant configuré pour recevoir une dite première moitié de moule de lentille respective (52) et étant réglable pour immobiliser en rotation ladite première moitié de moule (52), de telle sorte que ladite première surface optique (60) soit tournée vers l'extérieur par rapport à ladite surface frontale (16) du premier cadre et dans une position quelconque parmi une pluralité de positions angulaires par rapport audit axe (58) normal à ladite surface frontale (16) du premier cadre ;
dans lequel ledit second cadre (14) est configuré pour recevoir lesdites secondes moitiés de moule (76) selon un motif correspondant à la disposition desdites premières moitiés de moule (52) dans ledit premier cadre (12), de telle sorte que lesdites secondes surfaces optiques (132) soient tournées vers l'extérieur par rapport à ladite surface frontale (18) dudit second cadre (14), ladite surface frontale (18) du second cadre étant opposée à ladite surface frontale (16) du premier cadre lors de l'alignement dudit premier cadre (12) et dudit second cadre (14) dans une position fonctionnelle dans laquelle chaque dite première moitié de moule (52) vient en prise avec une dite seconde moitié de moule opposée (76) pour former ladite cavité (130).
